# EUROPEAN PATENT SPECIFICATION

(11) **EP 0 582 941 B1**
(45) Date of publication and mention of the grant of the patent: **25.03.1998**
(21) Application number: 93112426.7
(22) Date of filing: 03.08.1993
(51) Int. Cl.: G01J 5/62, G08B 13/193

(54) **A temperature distribution measurement apparatus**
Apparat zur Messung der Temperaturverteilung
Appareil pour la mesure de la distribution de la température

(30) Priority: 03.08.1992 JP 205841/92; 26.02.1993 JP 37748/93
(43) Date of publication of application: 16.02.1994
(73) Proprietor: MATSUSHITA ELECTRONICS CORPORATION, LTD., Osaka 571 (JP)
(72) Inventor: Yoshiike, Nobuyuki, Nara 630-01 (JP); Arita, Koji, Osaka 533 (JP); Morinaka, Katsuya, Osaka 573-01 (JP)
(74) Representative: Grünecker, Kinkeldey, Stockmair & Schwanhäusser Anwaltssozietät

(56) References cited:
- EP-A- 0 461 837
- US-A- 3 350 562
- PATENT ABSTRACTS OF JAPAN vol. 013, no. 222 (P-876)24 May 1989 & JP-A-10 35 696
- PATENT ABSTRACTS OF JAPAN vol. 014, no. 484 (P-1120)22 October 1990& JP-A-21 96 932.

## Description

The present invention relates to a temperature distribution measurement apparatus that utilises a pyroelectric type infra-red sensor, and its application to a human body detecting system.

From Patent Abstracts of Japan, Volume 013, No. 222 (P-876), May 24, 1989 and JP-A-10 35 696 of February 6, 1989, an arrangement for detecting an intruder and fire is known comprising two sets of rotatable and tiltable sensor elements which provide sensor signals which may be evaluated using the rules of trigonometry to determine direction and distance of the detected event. The arrangement further comprises chopping means, focusing means and driving means at each sensor. Each sensor is constituted by arranging 25 pieces of a pyroelectric element into a shape of a matrix, i.e. a two-dimensional infra-red sensor is used.

From US-A-3 350 562 an infra-red radiometer is known including a cavity having a black body reference surface, a radiation detector element located at one end of the cavity and a lens located at the opposite end of the cavity to focus infra-red rays on the detector element. A spherical chopper is mounted for rotation around said cavity to alternately expose the detector to external radiation and to radiation from said black body reflected from the chopper.

In recent years, there has been demands for measurement of room temperature distribution to detect presence of human beings and their motion in a room in connection with security maintenance, air conditioning and so on.

So far, there have been several methods that utilize infrared radiation in measuring temperature distribution in a space, one being an application of two dimensional quantum effect type solid state infrared immage sensors and another being an application of pyroelectric infrared sensors.

In the case of quantum effect type sensors. high accuracy in temperature measurement and high resolution are achieved but cooling system are required by the sensors which is too costly for their use with home applications.

There is a method to find the temperature distribution by detecting input energy of one direction after another through a single unit of pyroelectric sensor that performs a directional scanning vertically as well as horizontaly as disclosed in JP-A-57-185695, 2-183752, 2-196932, U.S.-A-5,159,200, 4,791,297 and 4,907,895.

However, in the case of using a pyroelectric sensor, there have been a disadvantages of low resolution in space and temperature which results from low sensibility, high complexity in mechanism, and difficulty in signal processing.

### SUMMARY OF INVENTION

The present invention relates to a temperature distribution measurement apparatus which includes an infrared array sensor, focusing means for focusing incident infrared rays on the infrared array sensor, chopping means having windows on the side in constant distance for intermittenly shielding incident infrared rays from plurality of the infrared array sensor elements, a brushless motor for continuously rotating the rotation member which includes the infrared array sensor, focusing means and chopping means, a housing for supporting chopping means and rotation member, cables wired on the flexible substrate and the one end of which is connected to said rotation member and the another end is connected to housing with middle part being bent or twisted and absorbing the deformation, and cylindrical chopping means is covered by cylindrical shaped cover and external shape is cylindrical.

In one exemplary embodiment, timing means detecting timing for chopping is arranged on chopping means of rotation member.

In another exemplary embodiment, chopping means and rotation member and position detecting means for detecting the position of rotation member is arranged on housing and rotation member.

Still further, the present invention provides a temperature distribution measurement apparatus in which the starting time and starting timing of sampling output signal of infrared array sensor is controlled by the signal detected by timing means.

Furthermore, the present invention provides a temperature distribution measurement apparatus which includes adder means for calculating the temperature measurement by successively adding sampled output signals in predetermind periods by the signal detected by timing means.

Furthermore, the present invention provides a temperature distribution measurement apparatus which includes a brushless motor having a frequency generator pattern and permanent magnet and the rotation speed of said brushless motor and the condition of rotation of its rotation member and chopping means is controlled by induced electric current caused by movement of the permanent magnet on the frequency generator pattern.

Furthermore, the present invention provides a temperature distribution measurement apparatus in which signal wires for timing means or/and signal wires for a thermistor are wired on a flexible substrate.

Furthermore, the present invention provides a temperature distribution measurement apparatus in which the chopping part has fins for cooling the infrared array sensor the by its movement.

Furthermore, the present invention provides a temperature distribution measurement apparatus in which the infrared lens for focusing is an aspherical chalcogen glass lens or an aspherical silicon lens.

Furthermore, the present invention provides a temperature distribution measurement apparatus in which the focusing means is arranged in front of the infrared array sensor.

Furthermore, the present invention provides a temperature distribution measurement apparatus in which the chopping part has n windows and rotates θc degrees, while said rotation member rotates θ s degrees during one open and close cycle of chopping and satisfying.$\text{θ c = (360/n± θ s)}$

Furthermore, the present invention provides a temperature distribution measurement apparatus in which the chopping means has n windows and rotates θ c degrees, while said rotation member rotates θ s degrees during one open and close cycle of chopping and satisfying.$\text{θ c/ θ s = integer}$

Furthermore, the present invention provides a temperature distribution measurement apparatus in which the rotating direction can be changed after measuring in one rotating direction, by rotating backward the driving means.

### BRIEF DESCRIPTION OF THE DRAWINGS

Fig.1 is a perspective view to show the outline of a temperature distribution measurement apparatus as one embodiment of this invention;
Fig.2 is a partially cutaway perspective view of the temperature distribution measurement apparatus;
Fig.3 is a constitutional view to show relative position relation of gears in the temperature distribution measurement apparatus;
Fig.4 is a perspective view to show a chopper in the temperature distribution measurement apparatus;
Fig.5A is top plan view to show a cylindrical chopper with fins in the temperature distribution measurement apparatus;
Fig.5B is a perspective view to show the cylindrical chopper with fins in the temperature distribution measurement apparatus;
Fig.6 is a schematic block diagram to show an electric circuit system in the temperature distribution measurement apparatus;
Fig.7 is a graph to show timing between chopping and direction of measurement in the temperature distribution measurement apparatus;
Fig.8 is a partially cutaway view to show an outline of a temperature distribution measurement apparatus as another embodiment of this invention;
Fig.9 is a constitutional view to show position relation of gears in the another embodiment of this invention;
Fig.10 is a partially cutaway perspective view to show the outline of the temperature distribution measurement apparatus as another embodiment of this invention;
Fig.11 is a partially cutaway perspective view to show the outline of the temperature distribution measurement apparatus as another embodiment of this invention;
Fig.12 is a partially cutaway perspective view to show the outline of the temperature distribution measurement apparatus as another embodiment of this invention;
Fig.13 is a unfolding view of a cylindrical chopper in the temperature distribution measurement apparatus as another embodiment of this invention;
Fig.14 is a graph to show the timing of the chopper;
Fig.15A is a perspective view of cylindrical chopper;
Fig.15B is a unfolding view of cylindrical chopper;
Fig.16A is a partially cutaway perspective view to show the outline of the temperature distribution measurement apparatus as another embodiment of this invention;
Fig.16B is top plan view to show the chopper as another embodiment of this invention in the temperature distribution measurement apparatus;
Fig.16C is perspective view to show the chopper as another embodiment of this invention in the temperature distribution apparatus;
Fig.16D is a partially cutaway perspective view to show the outline of the sensor portion in the temperature distribution measurement apparatus as another embodiment of this invention;
Fig.17 is a perspective view to show a brushless motor in the temperature distribution measurement apparatus as another embodiment of this invention; and
Fig.18 is a plane view to show a wire cable in the temperature distribution measurement apparatus as another embodiment of this invention.

### DETAILED DESCRIPTION OF PREFERRED EMBODIMENT

### Exemplary embodiments of the present invention are now described.

### (Example 1)

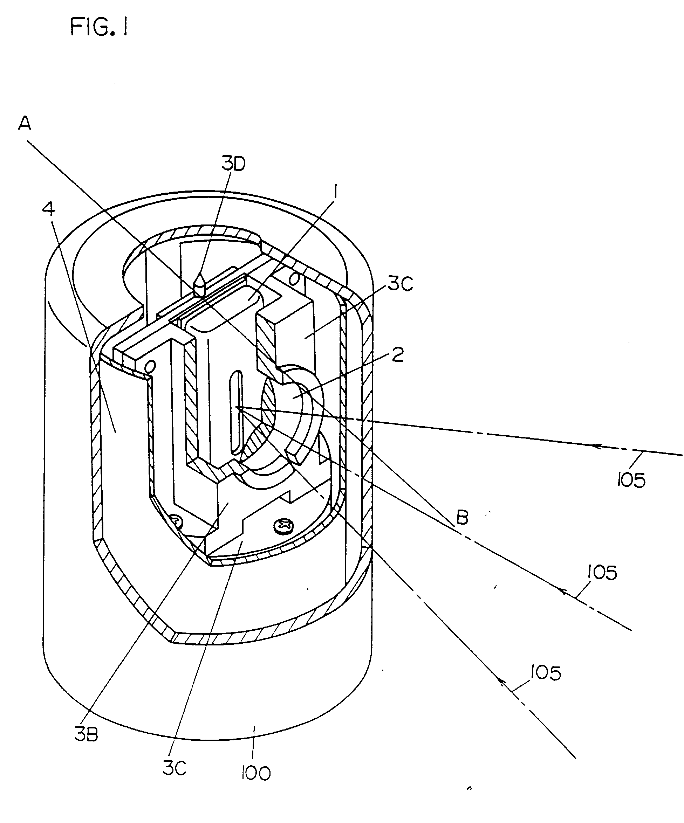

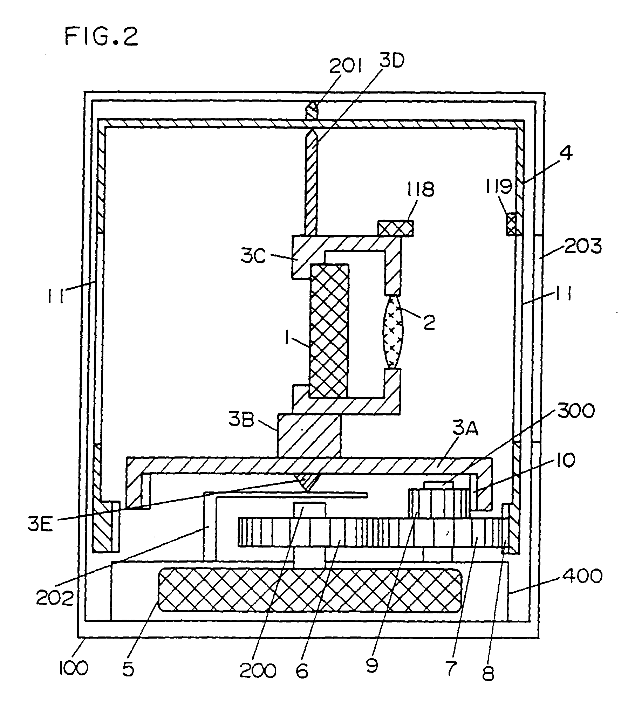

Fig.1 shows a partially cutaway perspective view of a temperature distribution measurement apparatus as a first embodiment of the invention. Fig.2 is a cross sectional view in accordance with line A-B of the temperature distribution measurement apparatus of Fig.1. In Fig.1 and 2, 100 denotes a housing of the temperature distribution measurement apparatus. In housing 100, a chopper 4 is disposed in such manner that chopper 4 is rotated by a motor 5. The chopper 4 is of cylindrical shape. In the chopper 4, a rotation member 3 is disposed in such manner that rotation member 3 is rotated by motor 5 in chopper 4 and also in housing 100. As apparent from Fig.2, rotation member 3 includes a base portion 3A, rotational axis portion 3B, and support portion 3C, and rotational spindle portion 3D, 3E. These five portions are integrally made by use of synthetic resin etc. The support portion 3C supports an infrared array sensor 1 which includes a plurality of detector elements and an infrared lens 2 which is used for focusing infrared rays which are radiated from objects to be detected such as human bodys etc. on the infrared array sensor 1.

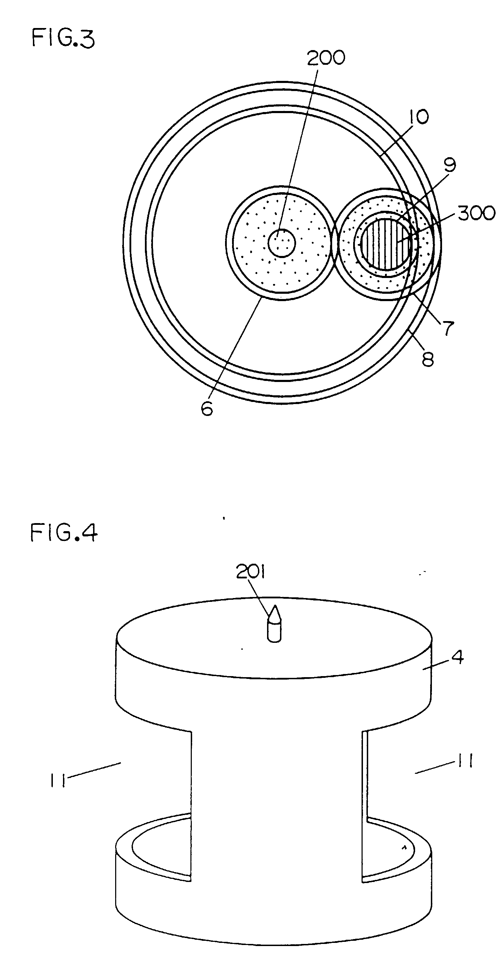

As explained above, chopper 4 is rotated by motor 5. As shown in Fig.2, motor 5 is fixed on a bottom portion of housing 100. First gear wheel 6 is fixed to a rotation spindle of motor 5. Gear teeth 8 are formed at lower end portion of an inner surface of chopper 4. Gear teeth 8 are coupled to first gear wheel 6 through a second gear wheel 7 which is rotatably mounted around an axis 300 disposed on a base 400. As also explained above, rotation member 3 is supported by stand 202 and the rotational spindle portion 3D, 3E; and rotated by motor 5. That is, as is apparent from Fig.2, an inner surface of base portion 3A has gear teeth 10. The gear teeth 10 are engaged with a third gear wheel 9 which is rotatably mounted around axis 300. The third gear wheel 9 is rotated by motor 5 through the first gear wheel 6 and the second gear wheel 7. Fig.3 shows layout pattern of gear wheels 6, 7, 9 and gear teeth 8, 10.

As shown in Fig.4, chopper 4 has two windows 11 which are opened in opposite position to each other. The infrared rays incidents to the infrared array sensor through window 203 of housing and windows 11 of chopper 4. When motor 5 is driven. chopper 4 rotates continuously around the chopper axis 201 and shields the infrared rays 105 intermittenly. At the same time, rotation member 3 is also rotated by motor 5.

Infrared ray 105 is applied to infrared lens 2. For this, the vertical temperature distribution of the space facing infrared array sensor 1 and infrared lens 2 is measured.

As a result, by rotating rotation member 3 forward and changing the direction of infrared array sensor 1 and infrared lens with driving the chopper 4. the vertical temperature distribution of the space facing the infrared array sensor is measured.

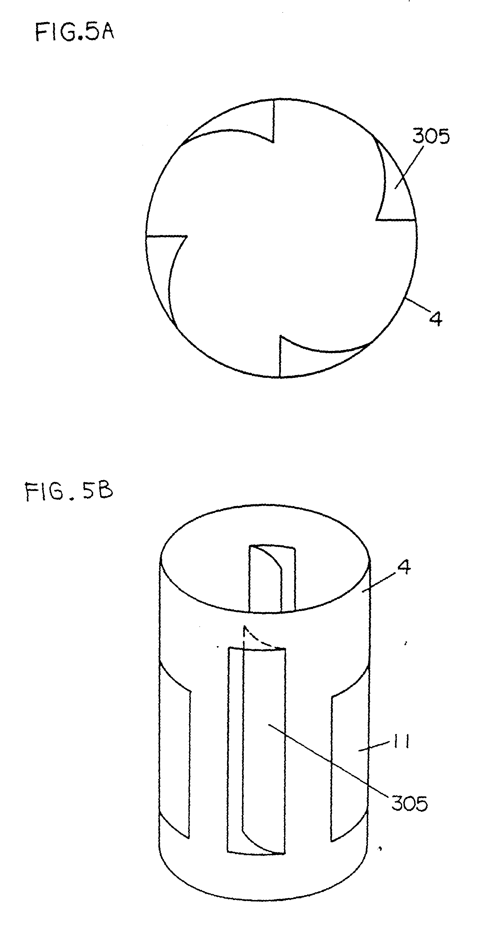

After this measurement, the temperature distribution in respective direction is connected with each other vertically by signal processing, and reversed two dimensional temperature distribution in the open space is obtained. In this process of measurement, after measuring in the last direction of the space facing infrared array sensor 1, motor 5 is driven backward to return the infrared array sensor 1 to the initial position. And it is ready for next measurement. In addition, the range of the space that can be covered by the measurement depends on the viewing angle of infrared lens 2 and the sensor dimension. Furthermore, it is possible to made N openings and closing cycles for infrared array sensor 1 in one rotation by providing N windows. It is also possible to cooldown the infrared array sensor by equipping chopper 4 with fins. This shown in Fig.5. In Fig.5, cylindrical chopper has four fins 305.

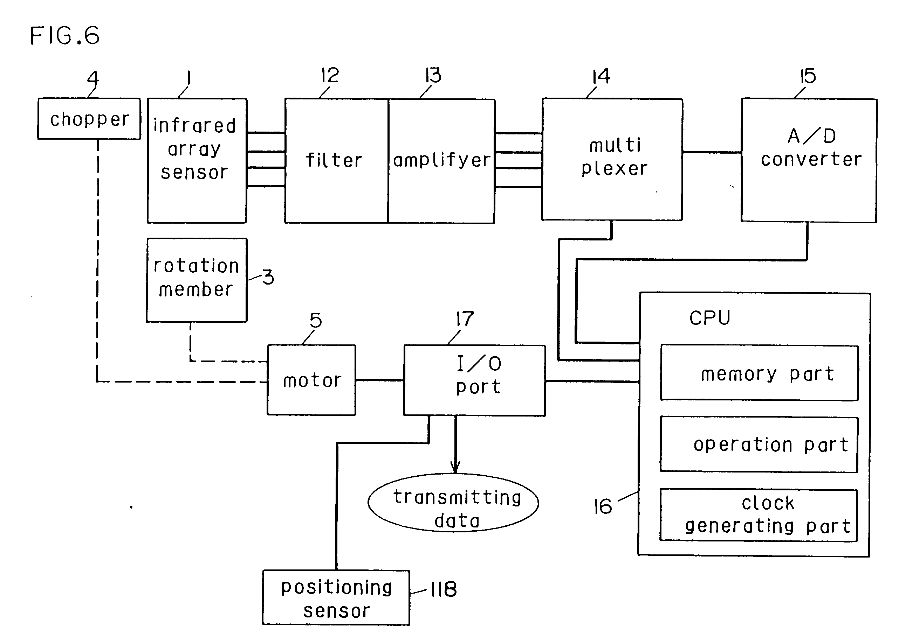

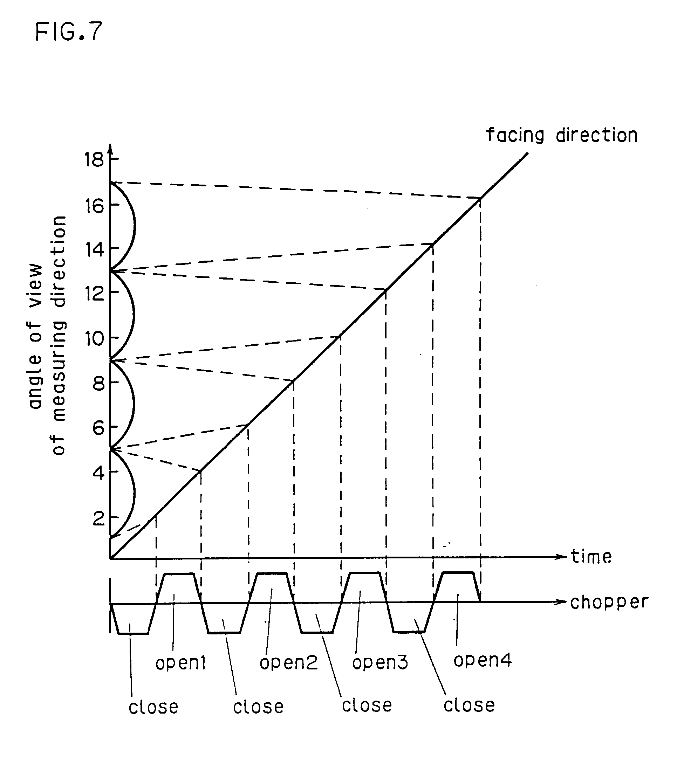

Next, Fig.6 shows a block diagram involved with the electrical signals of the measurement apparatus. An I/O part 17 is electrically connected with CPU 16 which involves motor 5, clock signal generator, operator, data memory. The signal from infrared array sensor 1 is amplyfied by filter 12 and amplyfier 13, and selected by multiplexer 14. The selected element of signal is processed by an A/D converter and input to CPU 16. By rotation of rotation member 3 and continuous rotation of chopper 4 by drive of motor 5, output of infrared array sensor 1 is obtained in the timing of electric signal wave shape shown in Fig.7. Fig.7 shows the relation among interval time of measurement, phase change of chopper, angle of space facing the infrared array sensor 1 of rotation member 3 and range of angle of view.

In Fig.7 when starting the measurement. the direction of chopper is fixed to 0 degree. And chopping begins with open phase. Each gear has a determined teeth to perform open and close of chopping once in 4 degrees of rotation angle of infrared array sensor 1. In this case, the effective angle of view of right and left are fixed degrees respectively.

In the first open phase of chopping, the thermal energy of 1 degree to 5 degree is measured as shown in Fig.7.

In the second, third, and fourth open phases of chopping, the thermal energy of 5 degree to 9 degree, 9 degree to 13 degree, and 13 degree to 17 degree is measured respectively.

The number of sensor's detecting electrode is supposed as n and infrared array sensor sweeps angle in one open and close phase is supposed θ degree. The adress of data is, for example, expressed as S₀₁, S₀₂ ····· S₀ₙ. After each step, the data is stored. After the mth forward rotation, the adrresses of data are expressed as Sₘ₁, Sₘ₂ ····· Sₘₙ. After measuring the last direction of the space facing the infrared array sensor 1 (the mth measurement), from the signal from CPU 16, the direction of rotation is inversed. The motor is (m×θ ) degrees rotated in reverse direction, and back to the initial position. And it is ready for next measurement. The reverse rotating speed is the faster, the better. The data of the measurement is processed as a matrix of the following:${\text{S}}_{\text{01}} {\text{, S}}_{\text{02}} {\text{····· S}}_{\text{0n}}$${\text{S}}_{\text{11}} {\text{, S}}_{\text{12}} {\text{····· S}}_{\text{1n}}$${\text{S}}_{\text{m1}} {\text{, S}}_{\text{m2}} {\text{····· S}}_{\text{mn}}$

Thus the temperature distribution of the open space can be measured with a resolving power of n×m. The timing of taking in data processing signal is estimated from relative interval of chopping which is determined by positioning sensor 118 equipped in rotation member 3 and sensitive plate 119 equipped in chopper 4. This is shown in Fig.2. For example, it is possible to use permanent magnet as sensitive plate, and hole element as positioning sensor; or photo reflectance plate as sensitive plate and photodiode or phototransister as positioning sensor 118; or thin plate as sensitive plate, and photointerrupter as positioning sensor 118. The timing means of our embodiment comprises positioning sensor, sensitive plate, photodiode and so on. How to use these timing means is described in detail later. Moreover, the timing of taking in data processing signal is estimated from deduction of each chopping interval.

A specific example of measurement is explained with reference to Fig.2. Infrared array sensor 1 is set with its longer axis positioned vertically and sensor rotating part 3 and chopper 4 are driven at 10Hz. Then, the vertical dose distribution of the thermal radiations, namely, the vertical temperature distribution of space of 4 degrees of horizental (right and left) range can be measured every 1/10 second. The range of the space that can be covered by measurement is determined by the viewing angle of the lens 2 and the sensor dimensions and the vertical space resolution is decided by the number of the infrared detecting electrodes as prepared in the infrared array sensor 1.

For example, when the viewing angle of the lens 2 is 80 degrees and array sensor 1 has 10 detecting electrodes, the vertical resolving power is 10 and each electrode takes care of 8 degrees in temperature measurement.

### (Example 2)

The relation of relative rotation speed between rotation member and chopper is allowed the following condition.

Now θ s the degrees during one open and close phase in chopping, chopper to have n open and close phase in one rotation. and sensor rotating part and chopper to rotate same direction. the rotating angle of chopper θ c is expressed as$\text{θ c = 360/n+ θ s}$

When using transmission and one driving means to rotate the sensor and chopper, the ratio of rotating speed of rotation member Rs and rotating speed of chopper part Rc is expressed as following.$\text{R = Rc/Rs = θ c/θ s}$

It is need to set up the transmission ratio R to be integer for chopping constantly in same interval.

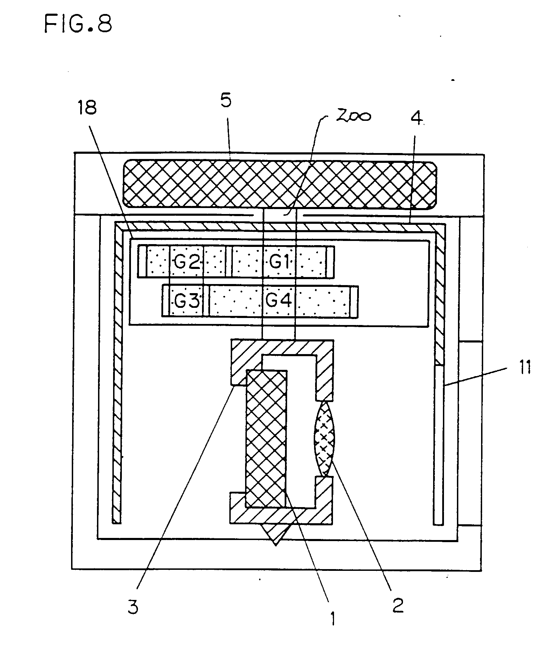

With the help of Fig.8, this example of the embodiment of this invention is explained in more detail.

The chopper 4 with chopping windows 11 is directly driven by motor 5, the sensor rotating part is connected to motor 5 through transmission 18 with 4 gears named G1 to G4.

If motor 5 rotates in rotating speed Rm, rotation speed of chopper 4 equals to Rm.

Then rotation speed of rotation member 3 Rs is decreased by transmission 18 and rotates slowly.

For instance, if the number n of windows 11 of chopper equals 2, and the degrees θ s which rotation member 3 sweeps during chopping in one open and close phase equals 6 degrees, R is given by above equation and equals 31.

Then chopping frequency is fixid 10Hz, then the degrees of rotation during one second θ c10 is given as$\text{θ c10= θ c × 10 = (360/2 + 6) × 10 = 1860 (degrees)}$

And rotation speed Rc10 is given as$\text{Rc10 = 1860 × 60/360 = 310 (rpm)}$

And by aforementioned equation, the rotation speed of sensor rotating part 3 Rs10 equals$\text{Rs10 = Rs10/R = 310/31 = 10 (rpm)}$

So it is possible to measure the range 120 degrees in 2 seconds. Now the important point is that by setting R to be integer the decreasing the rotation speed using transmission is facilitated.

In the embodiment of this invention illustrated in Fig.8, gear G1 is directly drived by motor 5, gear G2 and G3 is fixed and G4 is fixed with sensor rotating part 3.

In this transmission 18, if the number of teeth is denoted as G1, G2, G3, G4, the G1, G2, G3, G4 need to satisfy following equation.$\text{R = (G2/G1) × (G4/G3) = 31}$

In the embodiment of this invention, the number of windows of chopping n, rotation speed θ s, θ c, and mechanism of rotation and transmission is not restricted to above example.

If the sensor and chopper rotates different directions, by setting up the rotation speed θ c as following equation.$\text{θ c = 360/n - θ c}$

The same way of chopping discribed as above example is accomplished.

### (Example 3)

In example 1, only one gear 7 for chopping and only one gear 9 for sensor rotating is used.

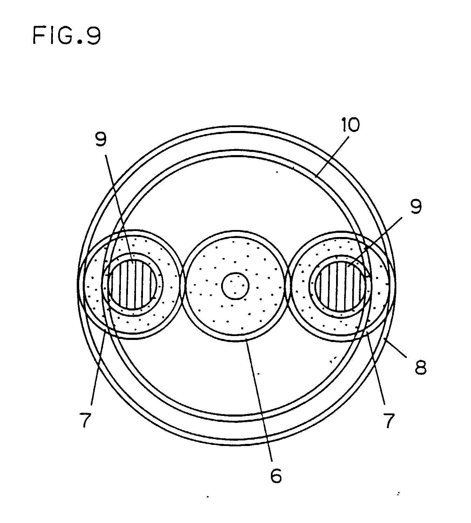

But as shown in Fig.9 by providing two gears of second gear wheel 7 and two gears of third gear wheel gear 9 respectively at two places, and it is still better by disposing symmetrically, it is possible to rotate smoothly and remove shake in driving.

### (Example 4)

In example 1, number of forward and backward rotation is set up by CPU.

In Fig.2, stop switch is positioned to contact rotation member 3, and the rotation member 3 is rotated in the reverse direction. This is after the signal is sent to CPU from the first stop switch.

Then, rotation member 3 is returned to the initial direction, contacts the second stop switch, and is stopped its reverse directioned rotation. In this time chopper 4 moves same way.

In addition, it is possible to controll forward rotation or backward ratation of rotation member by the stop switch.

And it is possible to stop or drive continuously the chopper during backward rotation of rotation member.

Furthermore it is possible to only reverse the rotation of rotation member by changing gears of change another system of gears.

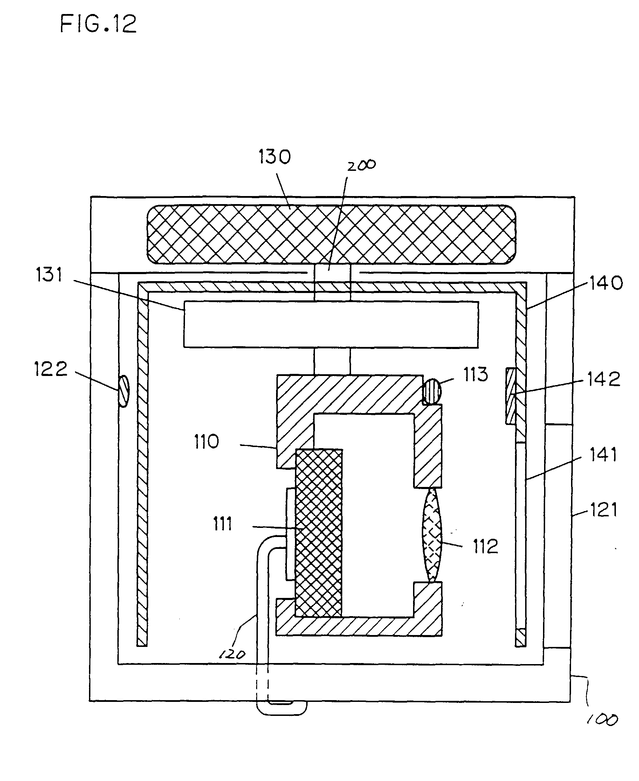

Besides, as shown in Fig.12, it is possible to dispose a light intercepting component 122 on housing 100 for stopping the rotation of rotation member.

### (Example 5)

As the method shown in example 1, first measures forward direction by forward rotating the rotation member.

By changing the direction of infrared array sensor and infrared lens and also by driving the chopper in the same way as in the foregoing, a temperature distribution is measured.

The results is processed with matrix form.

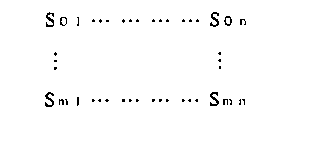

And the temperature distribution of the open space can be measured with a resolving power n×m.

Next, after the measuring last direction facing the infrared array sensor and lens (the mth measurement), through the signal from CPU, the motor is directed to rotate backward.

Then, the temperature distribution is measured successively to the direction where infrared array sensor 1 and infrared lens 2 initially faced.

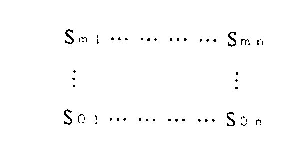

These data are processed with matrix form, and the temperature distribution of the on space can be measured with a resolving power n×m.

The element of this matrix formed is not arranged in same place of initial matrix formed data.

To arrange in same form, the operation in the backwards rotation shown in example 1 can be utilized.

### (Example 6)

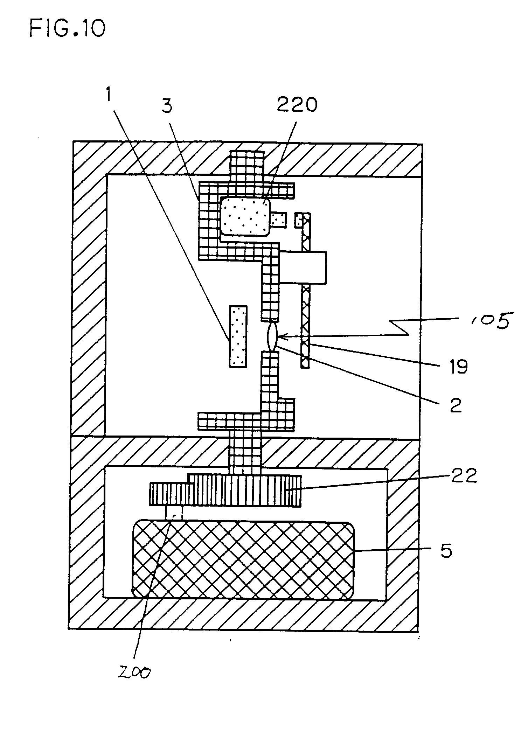

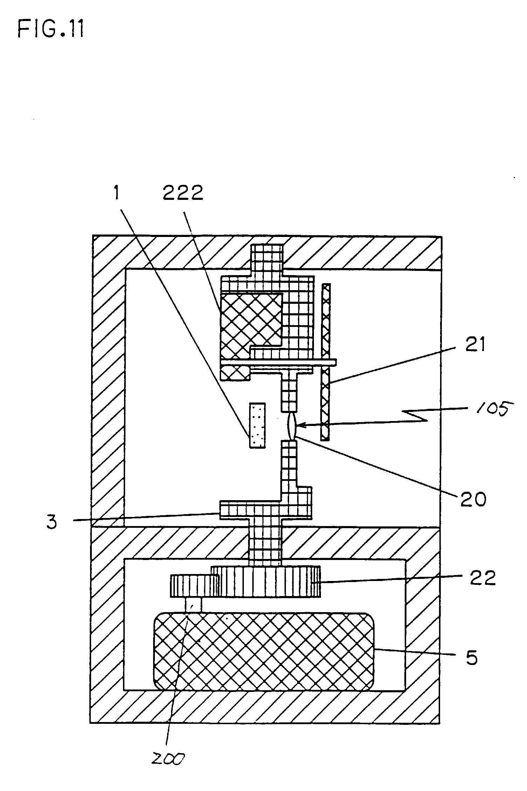

Fig.10 and 11 is to show briefly a constitution of one example of the embodiment of this invention.

In Fig.10 pendulum chopper 19 is used as chopper and driven by compact sized solenoid 22.

In Fig.11 rotating disc type chopper is used as chopper and driven by compact sized motor 222.

The other part is same as above example.

By using this type of temperature distribution measurement apparatus, almost same functions as the above mentioned temperature distribution is obtained.

### (Example 7)

A measurement apparatus of the foregoing example is set on the upper part of the walls of a room. that measures about 6 meters by 6 meters to determine the temperature distribution of the whole room.

The number of the receiving elements is chosen as 10 any right and left rotational steps are set as 30.

Then, the temperature distribution of the open space is expressed by a matrix of 10×30 as in the following:

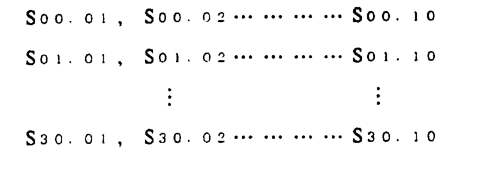

Here from the distribution data on the measured temperature of more than 32 °C, existence and number of persons in the room are detected.

It is difficult to tell one person located near the measurement apparatus from a multiple number of persons gathering at a far place by only one time measurement.

However it is not impossible to make a judgment from experience by looking at the changes of the measured temperature distribution against the lapse of time. In addition, a judgement on the magnitude of activities of the persons in the room can be made in a qualitative manner.

Moreover, use of a fuzzy theory and a the membership function is effective in arriving at judgement with a higher accuracy in the above judgement.

### (Example 8)

Next refering to Fig.12, a detailed example of timing means is explained.

In Fig.12, housing 100 is supported together with motor (driving means) 130. The housing 100 has window 121. 113 is photocoupler set up on rotation member 110. 142 is a light reflecting plane set up on inside of cylindrical chopper 140.

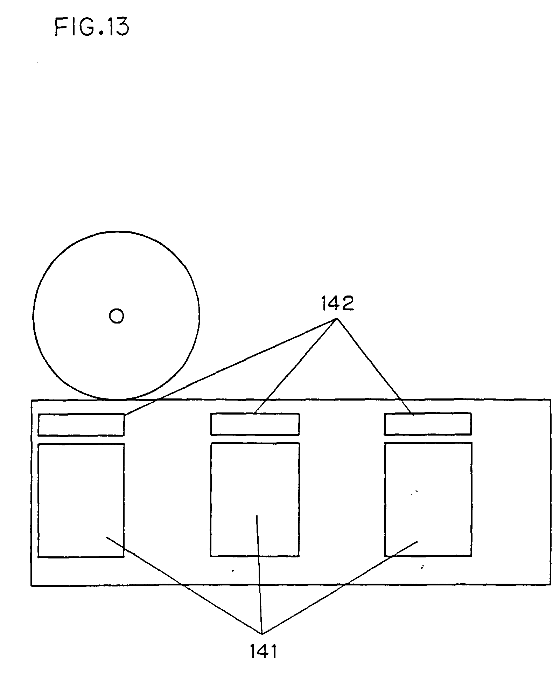

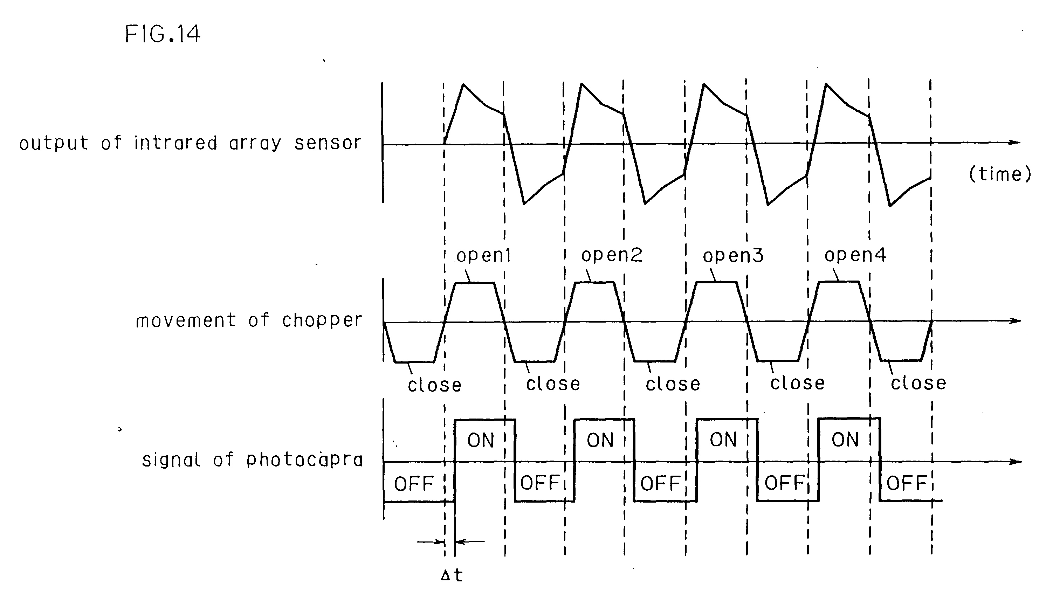

Furthermore light intercepting component 122 is set up on inside of housing 100. Fig.13 is unfolding illustration of cylindrical chopper 140. The rotation of motor 30 drives rotation member 110 and chopper 140, output of sensor is provided and shown in Fig.14.

Fig.14 shows the relation among measuring time, change in phase of chopper, signal of photocoupler 113 and output signal of element of infrared array sensor 111.

In Fig.14 the time when starting measurement, the direction which the infrared array sensor 1 and lens faces is fixed 0 degree, and chopper starts with close phase chopping in open and close motion takes place once while rotation member 110 rotates 3 degree. The teeth number of gear of transmission is determined to satisfy above correspondence.

Signal of photocoupler and output signal of element infrared array sensor do not need to be synchronized completely.

And, if signals are synchronized with constant gap, (for instance Δt shown in Fig.14,) it is possible to take the signal into CPU by the institution of CPU.

In this Fig.14, output of infrared array sensor is exactly detected by taking in signal of infrared array which is always delayed Δt from signal of photocoupler. Now, one example of the way to estimate a measured temperature by A/D transformed digital signal is explained. The electric circuit of this example is same as Fig.6.

First, the memory data after an A/D conversion of the light intercepting part of infrared array sensor (suppose there are channels from 1st to n'th), is cleared. Next, after Δt of a signal from photocoupler which corresponds to sensor input phase, the sensor outputs from the 1st channel to the n'th channel are input for an A/D conversion in sequence at a certain frequency according to the multiplexer.

On each channel, one output value after the conversion is ( the i'th data of Si example ) added to the integral value integrated up to one value before and resultant value of [S total = S total + Si] is gained.

Next, the above process is repeated a certain number of times which is the number of sampling times established in advance (e.g set up time) and the value for each channel is taken for the period of chopper's one open state.

By obtaining relation between temperature and integral value gained in the forgoing set up time established in advance, the one dimensional temperature distribution of an open space is accurately measured.

If, it is by the time of close a phase of chopper, above number of sampling is arbitrarily fixed without summing up over the whole range. The feature of this example, is effective in the case when output signal of sensor has a large noise. In this example, error has scarcely been made in at maximum value of noise and in this example, the result of measurement scarcely can be affected by high-fequency noise.

In addition, in above measured example, after terminating the A/D conversion, the intergral processing of the signals is performed before the next data is sampled. However in this case, the sampling cycles may likely be extended.

So, by having all the needed data collected within a given time and stored once in the memory and released for a calculation processing all at once, a higher speed sampling can be possible.

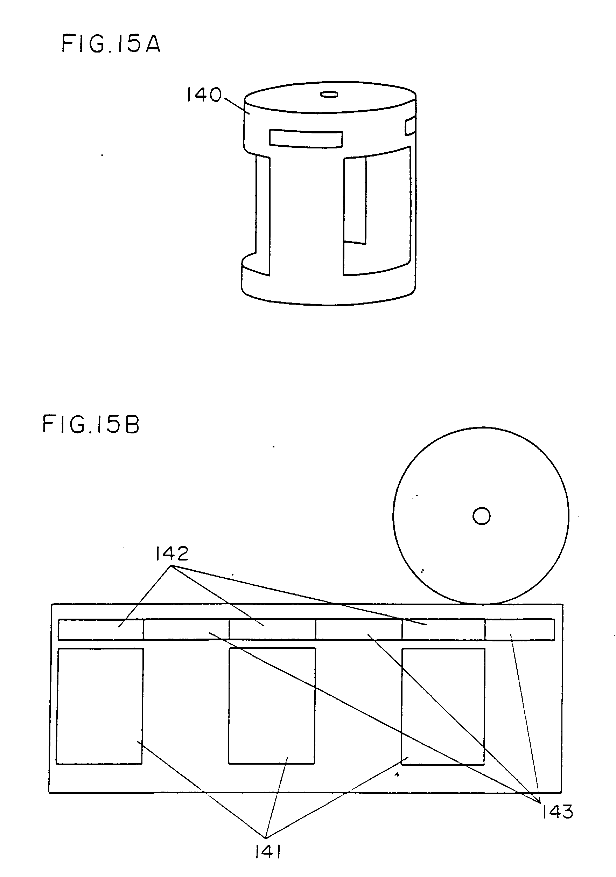

And as shown in Fig.15, setting up windows 143 in chopper 140, luminescence from photodiode of photocoupler 113, can be acceppted in photodiode element instituted on the housing 100 through windows 143.

The light intercepting element set up as starting and ending position of rotation can accept a luminescence from photodiode of photocoupler 113 by rotation of rotation member 110, and it can be possible to control start and end position of the rotation member 110.

When rotation member 110 rotates forwardly, and photocoupler 113 reaches the end position, by the signal of luminescence intercepting element set up at the end position, motor 30 is stopped and rotated backward.

When sensor faces to initial direction, and through the signal of other luminescence intercepting element, backward rotation is halted. In this period, chopper 140 also rotates backward.

Furthermore, it can be possible to control either forward rotation or backward rotation of the rotation member 110 using the signal of light intercepting element 122.

And chopper can be stopped or continuously rotated during the backward rotation of rotation member 110.

Moreover, the rotation member can only be reversely rotated by changing gears or using other gear system.

Moreover, as another embodiment, it can be possible to control the total rotation angle of rotation member 110 with the signal of photocoupler 113.

Since the signal of photocoupler corresponds to constant rotation angle, a certain number of signal from photocoupler can be chosen to stop or rotate backward the rotation member.

For instance, as shown in embodiment. chopping occurs once while rotation member rotates 3 degrees, and when the chosen number of signal from photocoupler reaches 40, rotation of driving part 130 is stopped and 120 degrees of sensing is accomplished.

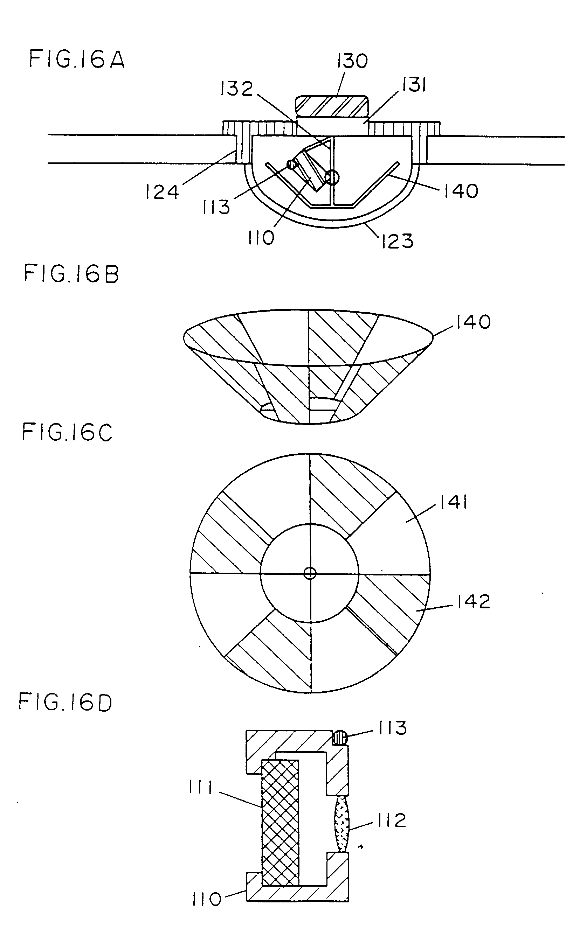

Fig.16A is perspective view of other embodiment of this invention. Rotation member 110, has a pyroelectric type infrared array sensor 111 where in a multiple number of detecting elements are laid out in a linear form and a infrared lens 112 is positioned in front of the infrared array sensor 111 to have the incident infrared rays focused on the pyroelectric array sensor 111, furthermore, photocoupler 113 is positioned on the infrared array sensor to detect the phase of chopping.

Fig.16B and Fig.16C respectively show the perspective and plane view of umbrella shaped type chopper.

Fig.16D is cross sectional view of rotation member 110.

Chopper 140 of umbrella shaped type having windows 141 is positioned in front of infrared lens, and cuts off the incident infrared rays intermittendly. The chopper 140 has a reflecting plane 142 to reflect the luminescence light of photocapra 113.

Chopper 140 and rotation member 110 are connected mechanically with driving means 130 through the shaft 132, and rotate in different rotation speed respectively by transmission 131.

Using above mentioned constitution, temperature distribution can be measured in the same way.

In addition, instead of using photocapra as means for detecting a chopping, hole element, electric contact signal and so on, can also be used.

Disc type chopper is also available for the chopping.

### (Example 9)

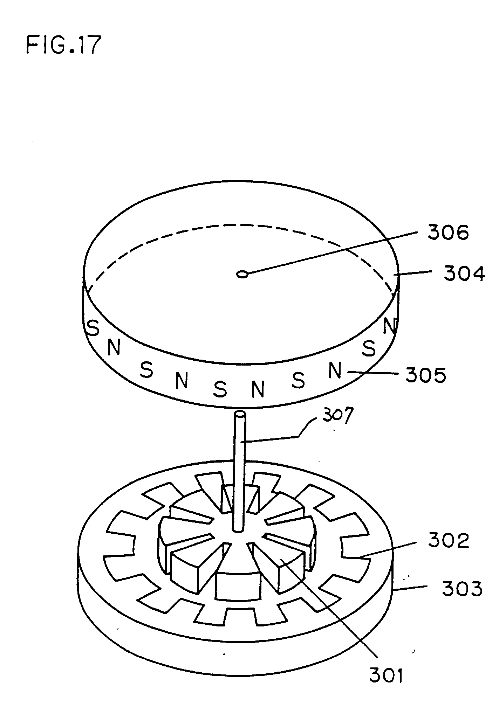

Fig.17 is a perspective view of embodiment using a brushless motor of this invention.

Above the disc shaped base 303, several electromagnet coilS are arranged in a concentric circle, and around of axis 307 of the disc base, zigzag frequency generator pattern 302 is wired in zigzag pattern.

And axis 307 is positioned at the central of disc base, while the inside fringe of motor cover 304, permanent magnet 305 is disposed and there is a hole 306 for inserting the axis 307.

This type of brushless motor rotates with repulsion and attraction owing to the flowing of current in the electromagnetic coil 301.

In this case the induced magnetic field crosses the frequence generator pattern 302, so voltage is induced on frequency generator pattern.

By using this induced voltage, the rotation speed of motor is controlled. For this, in each direction of randomness can be decreased.

And using induced voltage, the phase of rotation of rotation member and chopping means can be estimated.

Therefore, the timing of signal processing can be automatically establisned without photosensor etc.

Futhermore, it is possible to build in control circuit to brushless motor.

By this, number of cables can be reduced and the compact temperature distribution measurement apparatus can be realized.

In addition, by using brushless motor, superior sensitivity is accomplished compared with motor with brush, for a brushless motor generates smaller amount of electromagnetic noise.

### (Example 10)

As shown Fig.12, bundle of cables is used to take out the signal generated in infrared array sensor, from the housing.

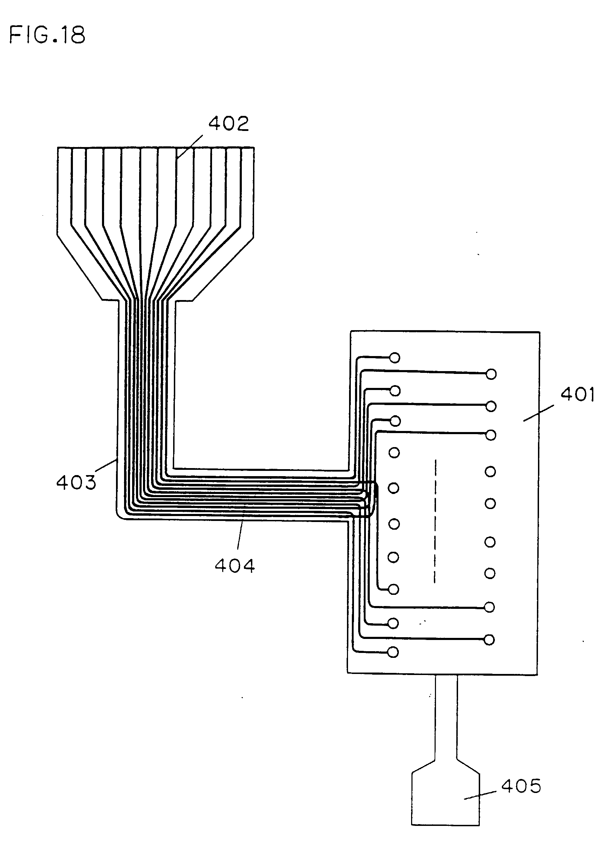

Cables 120 is connected to nowhere, and Fig.18 shows the state of the cables 120 under the no exterual force. Fig.18 shows the configuration of bundle of cables. The one end 401 of bundle of cables which is connected to infrared array sensor 111 has a rectangular shape and the other end 402 which is connected to outside surface of housing 100 has a pentagonal shape, and the middle part 403 between the both end, bent in right angle at the center of it.

Material of base is flexible such as plastic etc. And signal cables 404 is wired above it.

As shown in Fig.12, one end 401 of cables is connected to rotation member. Middle part 403 of cables is bent at the side of 401, twisted the other end being lead to outside of the housing 100 the through the hole, and bent at right angle. And the other end 402 is connected to the surface of the housing 100.

It is possible to bend the middle connecting part at right angle moreover.

And when in the case of the infrared array sensor 111 being rotated 180 degrees or 360 degrees, the middle connecting part 403 absorbs the deformation. So this bundle of cables is superior in compact in size and easiness in bending.

Like this case, it is possible to constitute a simple construction with leading out the middle connecting part of cables from the side of housing.

It is also possible to lead out from the bottom or the topside of the housing. Futhermore it is possible to form the middle part to be spiral configurarion. In this configurarion, it is possible to absorb the deformation in the case of two or three revolutions of rotation member.

Furthermore, it is possible to incorporate signal cable 405 to flexible substrate in order to lead out from the housing.

And this signal cable 405 leads the signal from photocoupler.

And it is also possible to use a thermistor for measuring temperature to rotation member. And it is also possible to incorporate the signal cable connected with this thermistor to the flexible substrate in order to lead out from the housing. In addition, it is possible to mount the thermistor to the substrate.

### (Example 11)

The temperature distribution measurement apparatus of the embodiment of this invention can be applied to program rating measuring system.

Namely, for the position where viewers usually take to watch the television, infrared array emitted from viewers is measured. For instance, this system can be set up on the television set.

By using this compact apparatus, it is easily to measure the accurate program rating.

And, if television is turned on, the temperature distribution is measured, and number of audience is estimated as mentioned above. The data relating to number of viewers are transmitted to the outside through telephone cable.

These data includes only the data of the number of viewers, so the amount of data to transmit can be reduced.

And long expected life span of this system is accomplished and the situation of the audience is ackowledged exactly by working the system only when television set is turned on.

### (Example 12)

The infrared lens in this embodiment is, for instance, spherical silicon lens.

Spherical silicon lens means silicon of polycrystalline, and both side of (convex) spherical surface is polished and antireflection layer is formed.

This material is not expensive and easy to manufacture. A chalcogen asphericai surface lens is also available. This is made up from KRST, Ge, GeSe₁, GeTe₃ and manufactured through a process of direct pressing, a process of coating both side of the lens with an antireflection coating.

By this, it is possible to make a superior lens which has a such as high permeability, little aberration, little distribution of thermal image superior in mass production, and easy in high sensibility. As an antireflection coatings mentioned above, sputter coatings with vaporation of ZnS is used.

The thickness of this antireflection coating is λ /4n (λ = 10µm, n denotes an index of refraction of the lens).

In addition, the infrared array sensor is not resiricted to infrared array sensor of pyroelectric type.

Also the driving means are not restricted to motor.

## Claims

1. A temperature distribution measurement apparatus comprising:
a) an infrared one-dimensional array temperature sensor (1) composed of a plurality of detector elements arranged in a longitudinal axis of said sensor (1), which provides temperature output signals from which a temperature distribution is measured, disposed on a rotation member (3) having an axis of rotation (300) which is parallel to said longitudinal axis of said sensor (1),
b) focusing means (2) for focusing incident infrared rays on said infrared array temperature sensor (1),
c) a cylindrical chopping means (4) for intermittently shielding incident infrared rays from said infrared array temperature sensor (1) said chopping means (4) rotating around said infrared array temperature sensor (1), and
d) a driving means (5) for continuously rotating said rotation member (3), said infrared array temperature sensor (1) and said chopping means (4) around a common rotational axis (300) while synchronizing the rotation of said chopping means (4) with said rotation member (3), the rotation of said chopping means (4) and the rotation of said rotation member (3) being matched in a manner that the intermittent exposure of the infrared array sensor (1) to said incident infrared rays is effected at different measuring directions of said infrared array sensor (1).

2. The temperature distribution measurement apparatus of claim 1 further comprising a timing means (118, 119) for detecting timing for chopping which is located on said chopping means (4) or said rotation member (3).

3. The temperature distribution measurement apparatus of claim 1 or 2 further comprising a housing (100) for supporting said chopping means (4) and said rotation member (3), and a position detecting means (118) for detecting the position of said rotation member (3), arranged on said housing (100) and said rotation member (3).

4. The temperature distribution measurement apparatus of claim 2 wherein the starting time and stopping time of sampling the output signal of said infrared array temperature sensor (1) is controlled by a signal detected by said timing means (118, 119).

5. The temperature distribution measurement apparatus of claim 2 further comprising an adder means for calculating the temperature measurement by successively adding sampled output signals in predetermined periods.

6. The temperature distribution measurement apparatus of one of claims 1 to 5 wherein the driving means is a brushless motor (5).

7. The temperature distribution measurement apparatus of claim 6 wherein said brushless motor has a frequency generator pattern (302) and a permanent magnet (305), and the rotation speed of said brushless motor and the condition of rotation of said rotation member and said chopping part is controlled by induced electric current caused by movement of said permanent magnet (305) on said frequency generator pattern (302).

8. The temperature distribution measurement apparatus of claim 6 further comprising cables (404) wired on a flexible substrate, one end (401) of said cables (404) being connected to said rotation member, another end (402) being connected to a housing and a middle part (403) of said cables (404) being bent or twisted.

9. The temperature distribution measurement apparatus of claim 8 wherein said cables (404) include a signal cable for a timing means and/or a signal cable for a thermistor.

10. The temperature distribution measurement apparatus of one of claims 1 to 9 wherein said chopping means (4) has fins (305) for cooling said infrared array temperature sensor (1) by its movement.

11. The temperature distribution measurement apparatus of one of claims 1 to 10, wherein said infrared array temperature sensor (1) includes an infrared lens (2) which comprises a spherical chalcogen glass lens or a spherical silicon lens.

12. The temperature distribution measurement apparatus of one of claims 1 to 11, wherein said chopping means (4) has windows (11) on the side which are equidistant from one another.

13. The temperature distribution measurement apparatus of one of claims 1 to 12 wherein said focusing means (2) is arranged in front of said infrared array temperature sensor (1).

14. The temperature distribution measurement apparatus of one of claims 1 to 13 wherein the direction of rotation of the driving means (5) is changed by rotating the driving means (5) backward.

15. The temperature distribution measurement apparatus of claim 1 or 12 wherein said chopping means (4) has n windows (11) and rotates θ_{c} degrees, while said rotation member rotates θₛ degrees during a chopping cycle and satisfies the equation:${\text{θ}}_{\text{c}} {\text{= (360/n ± θ}}_{\text{s}} \text{).}$

16. The temperature distribution measurement apparatus of claim 15 wherein said chopping means (4) satisfies the equation:${\text{θ}}_{\text{c}} {\text{/θ}}_{\text{s}} \text{= integer.}$

17. The temperature distribution measurement apparatus of claim 1 further comprising:
(a) a computational means for determining number and position of persons in a space by measuring the temperature distribution in said space; and
(b) a detector means for detecting movements of persons by analyzing change in said temperature distribution of said space with respect to time.

18. The temperature distribution measurement apparatus of claim 1 further comprising:
(a) a measurement means for measuring the temperature distribution in a space facing an audiovisual media during said media being at work; and
(b) a computational means for determining the number of persons in the space from said temperature distribution in said space and transmitting data of the number of persons to a program rating measuring system.

19. The temperature distribution measurement apparatus of claim 1, wherein the infrared array temperature sensor (1) is driven in one direction and subsequently in the opposite direction along its axis of rotation (300).

## Patentansprüche

1. Gerät zum Messen der Temperaturverteilung, enthaltend:
a) einen eindimensionalen Infrarot-Temperaturfeldsensor (1), bestehend aus mehreren Detektorelementen, die auf einer Längsachse des Sensors (1) angeordnet sind, der Temperatur-Ausgangssignale ausgibt, aus denen eine Temperaturverteilung gemessen wird, angebracht auf einem Rotationselement (3) mit einer Rotationsachse (300), die parallel zur Längsachse des Sensors (1) verläuft,
b) eine Fokussiereinrichtung (2) zum Fokussieren einfallender Infrarotstrahlen auf dem Infrarot-Temperaturfeldsensor (1),
c) eine zylindrische Unterbrechereinrichtung (4) zum intermittierenden Abschirmen einfallender Infrarotstrahlen vom Infrarot-Temperaturfeldsensor (1), wobei sich die Unterbrechereinrichtung (4) um den Infrarot-Temperaturfeldsensor (1) dreht, und
d) eine Antriebseinrichtung (5), die dazu bestimmt ist, das Rotationselement (3), den Infrarot-Temperaturfeldsensor (1) und die Unterbrechereinrichtung (4) um eine gemeinsame Drehachse (300) zu drehen, während sie die Drehung der Unterbrechereinrichtung (4) mit der des Rotationselementes (3) synchronisiert, wobei die Drehung der Unterbrechereinrichtung (4) und die Drehung des Rotationselementes (3) einander derart angepaßt wird, daß das intermittierende Freilegen des Infrarot-Feldsensors (1) für die eintreffenden Infrarotstrahlen in unterschiedlichen Meßrichtungen des infrarotfeldsensors (1) ausgeführt wird.

2. Gerät zum Messen der Temperaturverteilung nach Anspruch 1, weiterhin enthaltend eine Zeitgebereinrichtung (118, 119), zum Erfassen der Zeitgabe für die Unterbrechung, die sich auf der Unterbrechereinrichtung (4) oder dem Rotationselement (3) befindet.

3. Gerät zum Messen der Temperaturverteilung nach Anspruch 1 oder 2, weiterhin enthaltend ein Gehäuse (100) zum Halten der Unterbrechereinrichtung (4) und des Rotationselementes (3), und eine Positionserfassungseinrichtung (118) zum Erfassen der Position des Rotationselementes (3), die auf dem Gehäuse (100) und dem Rotationselement (3) angebracht ist.

4. Gerät zum Messen der Temperaturverteilung nach Anspruch 2, bei dem der Start- und der Stopzeitpunkt für die Abtastung des Ausgangssignals des Infrarot-Temperaturfeldsensors (1) durch ein Signal gesteuert wird, das von der Zeitgebereinrichtung (118, 119) erfaßt wird.

5. Gerät zum Messen der Temperaturverteilung nach Anspruch 2, weiterhin enthaltend eine Additionseinrichtung zum Errechnen der Temperaturmessung durch aufeinanderfolgendes Addieren abgetasteter Ausgangssignale in vorbestimmten Perioden.

6. Gerät zum Messen der Temperaturverteilung nach einem der Ansprüche 1 bis 5, bei dem die Antriebseinrichtung ein bürstenloser Motor (5) ist.

7. Gerät zum Messen der Temperaturverteilung nach Anspruch 6, bei dem dieser bürstenlose Motor ein Frequenzerzeugungsmuster (302) und einen Dauermagneten (305) aufweist, und die Rotationsgeschwindigkeit des bürstenlosen Motors und der Drehzustand des Rotationselementes und des Unterbrecherteils durch einen induzierten elektrischen Strom gesteuert werden, der durch die Bewegung des Dauermagneten (305) auf dem Frequenzerzeugungsmuster (302) verursacht wird.

8. Gerät zum Messen der Temperaturverteilung nach Anspruch 6, weiterhin enthaltend Leitungen (404), die auf einem flexiblen Substrat verlegt sind, wobei ein Ende (401) der Leitungen (404) mit dem Rotationselement und das andere Ende (402) mit einem Gehäuse verbunden und ein Mittelteil (403) dieser Leitungen gebogen oder verdrillt ist.

9. Gerät zum Messen der Temperaturverteilung nach Anspruch 8, bei dem die Leitungen (404) eine Signalleitung für eine Zeitgebereinrichtung und/oder eine Signalleitung für einen Thermistor enthalten.

10. Gerät zum Messen der Temperaturverteilung nach einem der Ansprüche 1 bis 9, bei dem die Unterbrechereinrichtung (4) Rippen (305) zur Kühlung des Infrarot-Temperaturfeldsensors (1) durch ihre Bewegung aufweist.

11. Gerät zum Messen der Temperaturverteilung nach einem der Ansprüche 1 bis 10, bei dem der Infrarot-Temperaturfeldsensor (1) eine Infrarotlinse (2) enthält, die aus einer sphärischen Chalcogen-Glaslinse oder einer sphärischen Siliziumlinse besteht.

12. Gerät zum Messen der Temperaturverteilung nach einem der Ansprüche 1 bis 11, bei dem die Unterbrechereinrichtung (4) auf der Seite Fenster (11) aufweist, die voneinander gleich entfernt sind.

13. Gerät zum Messen der Temperaturverteilung nach einem der Ansprüche 1 bis 12, bei dem sich die Fokussiereinrichtung (2) vor dem Infrarot-Temperaturfeldsensor (1) befindet.

14. Gerät zum Messen der Temperaturverteilung nach einem der Ansprüche 1 bis 13, bei dem die Drehrichtung der Antriebseinrichtung (5) durch Rückwärtsdrehen der Antriebseinrichtung (5) geändert wird.

15. Gerät zum Messen der Temperaturverteilung nach Anspruch 1 oder 2, bei dem die Unterbrechereinrichtung (4) n Fenster hat und sich um Θ_{c} Grad dreht, wenn sich das Rotationselement um Θₛ Grad während eines Unterbrechungszyklus dreht und die folgende Gleichung erfüllt:${\text{Θ}}_{\text{c}} {\text{= (360/n ± Θ}}_{\text{s}} \text{)}$

16. Gerät zum Messen der Temperaturverteilung nach Anspruch 15, bei dem die Unterbrechereinrichtung (4) die folgende Gleichung erfüllt:${\text{Θ}}_{\text{c}} {\text{/Θ}}_{\text{s}} \text{= ganzzahlig}$

17. Gerät zum Messen der Temperaturverteilung nach Anspruch 1, weiterhin enthaltend:
(a) eine Computereinrichtung für die Bestimmung der Personenzahl in einem Raum durch Messung der Temperaturverteilung in diesem Raum; und
(b) eine Detektoreinrichtung für die Erfassung der Bewegungen von Personen durch Analyse der Änderung der Temperaturverteilung des Raumes mit Bezug auf die Zeit.

18. Gerät zum Messen der Temperaturverteilung nach Anspruch 1, weiterhin enthaltend:
(a) eine Meßeinrichtung zum Messen der Temperaturverteilung in einem Raum, die auf ein audiovisuelles Medium gerichtet ist, während dieses Medium in Betrieb ist; und
(b) eine Computereinrichtung zum Bestimmen der Personenzahl im Raum aus der Temperaturverteilung im Raum und zum Übertragen von Daten bezüglich der Personenzahl zu einem Programm-Sehbeteiligungs-System.

19. Gerät zum Messen der Temperaturverteilung nach Anspruch 1, bei dem der Infrarot-Temperaturfeldsensor (1) in eine Richtung und anschließend in die entgegengesetzte Richtung entlang seiner Rotationsachse (300) angetrieben wird.

## Revendications

1. Appareil pour la mesure de la distribution de la température, comprenant :
a) un capteur matriciel (1) de température de rayons infrarouges à une dimension, composé d'une pluralité d'éléments détecteurs arrangés selon un axe longitudinal dudit capteur (1), qui fournit des signaux de sortie de température à partir desquels une distribution de la température est mesurée, disposé sur un organe de rotation (3) ayant un axe de rotation (300) qui est parallèle audit axe longitudinal dudit capteur (1),
b) des moyens de focalisation (2) pour focaliser des rayons infrarouges incidents sur ledit capteur matriciel (1) de température de rayons infrarouges,
c) des moyens cylindriques d'obturation à éclipses (4) pour protéger par intermittence des rayons infrarouges incidents sur ledit capteur matriciel (1) de température de rayons infrarouges, lesdits moyens cylindriques d'obturation à éclipses (4) tournant autour dudit capteur matriciel (1) de température de rayons infrarouges, et
d) des moyens d'entraînement (5) pour faire tourner continuellement ledit organe de rotation (3), ledit capteur matriciel (1) de température de rayons infrarouges et lesdits moyens d'obturation à éclipses (4) autour d'un axe commun de rotation (300) tout en synchronisant la rotation desdits moyens d'obturation à éclipses (4) et dudit organe de rotation (3), la rotation desdits moyens d'obturation à éclipses (4) et la rotation dudit organe de rotation (3) étant adaptées pour que l'exposition intermittente du capteur matriciel (1) de rayons infrarouges auxdits rayons infrarouges incidents soit effectuée à des sens de mesure différents dudit capteur matriciel (1) de rayons infrarouges.

2. Appareil pour la mesure de la distribution de la température selon la revendication 1, comprenant en outre des moyens de synchronisation (118, 119) pour détecter la synchronisation pour l'obturation qui sont situés sur lesdits moyens d'obturation à éclipses (4) ou ledit organe de rotation (3).

3. Appareil pour la mesure de la distribution de la température selon la revendication 1 ou 2, comprenant en outre un châssis (100) pour supporter lesdits moyens d'obturation à éclipses (4) et ledit organe de rotation (3), et des moyens de détection de position (118) pour détecter la position dudit organe de rotation (3), arrangés sur ledit châssis (100) et ledit organe de rotation (3).

4. Appareil pour la mesure de la distribution de la température selon la revendication 2, dans lequel l'instant du départ et l'instant de l'arrêt d'échantillonnage du signal de sortie dudit capteur matriciel (1) de température de rayons infrarouges sont commandés par un signal détecté par lesdits moyens de synchronisation (118, 119).

5. Appareil pour la mesure de la distribution de la température selon la revendication 2, comprenant en outre des moyens d'addition pour calculer la mesure de la température par l'addition successive de signaux de sortie échantillonnés dans des périodes prédéterminées.

6. Appareil pour la mesure de la distribution de la température selon l'une des revendications 1 à 5, dans lequel les moyens d'entraînement sont un moteur (5) sans balais.

7. Appareil pour la mesure de la distribution de la température selon la revendication 6, dans lequel ledit moteur sans balais a un motif de générateur de fréquence (302) et un aimant permanent (305), et la vitesse de rotation dudit moteur sans balais et la condition de rotation dudit organe de rotation et de ladite partie d'obturation à éclipses sont commandées par un courant électrique induit provoqué par le déplacement dudit aimant permanent (305) sur ledit motif de générateur de fréquence (302).

8. Appareil pour la mesure de la distribution de la température selon la revendication 6, comprenant en outre des câbles (404) câblés sur un substrat flexible, une extrémité (401) desdits câbles (404) étant connectée audit organe de rotation, une autre extrémité (402) étant connectée à un châssis et une partie intermédiaire (403) desdits câbles (404) étant pliée ou torsadée.

9. Appareil pour la mesure de la distribution de la température selon la revendication 8, dans lequel lesdits câbles (404) comprennent un câble de signal pour des moyens de synchronisation et/ou un câble de signal pour un thermistor.

10. Appareil pour la mesure de la distribution de la température selon l'une des revendications 1 à 9, dans lequel lesdits moyens d'obturation à éclipses (4) ont des ailettes (305) pour refroidir ledit capteur matriciel (1) de température de rayons infrarouges par leur déplacement.

11. Appareil pour la mesure de la distribution de la température selon l'une des revendications 1 à 10, dans lequel ledit capteur matriciel (1) de température de rayons infrarouges comprend une lentille (2) à infrarouge qui comprend une lentille sphérique de verre à chalcogène ou une lentille sphérique de silicium.

12. Appareil pour la mesure de la distribution de la température selon l'une des revendications 1 à 11, dans lequel lesdits moyens d'obturation à éclipses (4) ont des fenêtres (11) sur le côté, qui sont équidistantes les unes des autres.

13. Appareil pour la mesure de la distribution de la température selon l'une des revendications 1 à 12, dans lequel lesdits moyens de focalisation (2) sont arrangés devant ledit capteur matriciel (1) de température de rayons infrarouges.

14. Appareil pour la mesure de la distribution de la température selon l'une des revendications 1 à 13, dans lequel le sens de rotation des moyens d'entraînement (5) est changé par la rotation des moyens d'entraînement (5) en arrière.

15. Appareil pour la mesure de la distribution de la température selon la revendication 1 ou 12, dans lequel lesdits moyens d'obturation à éclipses (4) ont n fenêtres (11) et tournent de θ_{c} degrés tandis que ledit organe de rotation tourne de θₛ degrés pendant un cycle d'obturation et satisfont à l'équation :${\text{θ}}_{\text{c}} {\text{= (360/n ± θ}}_{\text{s}} \text{).}$

16. Appareil pour la mesure de la distribution de la température selon la revendication 15, dans lequel lesdits moyens d'obturation à éclipses (4) satisfont à l'équation :${\text{θ}}_{\text{c}} {\text{/θ}}_{\text{s}} \text{= nombre entier.}$

17. Appareil pour la mesure de la distribution de la température selon la revendication 1, comprenant en outre :
(a) des moyens de calcul pour déterminer le nombre et la position de personnes dans un espace par la mesure de la distribution de la température dans ledit espace; et
(b) des moyens de détection pour détecter les déplacements de personnes par l'analyse du changement de ladite distribution de la température dudit espace par rapport au temps.

18. Appareil pour la mesure de la distribution de la température selon la revendication 1, comprenant en outre :
(a) des moyens de mesure pour mesurer la distribution de la température dans un espace faisant face à un équipement audiovisuel pendant que le dit équipement fonctionne; et
(b) des moyens de calcul pour déterminer le nombre de personnes dans l'espace à partir de ladite distribution de la température dans ledit espace et pour transmettre des données du nombre de personnes à un système de mesure d'appréciation de programme.

19. Appareil pour la mesure de la distribution de la température selon la revendication 1, dans lequel le capteur matriciel (1) de température de rayons infrarouges est entraîné dans un sens et ultérieurement dans le sens opposé suivant son axe de rotation (300).
